# EUROPEAN PATENT SPECIFICATION

(11) **EP 3 512 082 B1**
(45) Date of publication and mention of the grant of the patent: **30.11.2022**
(21) Application number: 17814795.5
(22) Date of filing: 17.05.2017
(51) Int. Cl.: H02K 53/00, H02K 35/02, H02K 7/11, H02K 21/24, H02K 49/10, H02K 51/00, H02K 49/06, H02K 16/02, H02K 7/08, H02K 1/12

(54) **MAGNETIC DEVICE SUITABLE FOR USE AS A POWER GENERATOR OR DRIVE MOTOR**
MAGNETISCHE VORRICHTUNG ZUR VERWENDUNG ALS STROMGENERATOR ODER ANTRIEBSMOTOR
DISPOSITIF MAGNÉTIQUE APPROPRIÉ POUR ÊTRE UTILISÉ COMME GÉNÉRATEUR D'ÉNERGIE OU COMME MOTEUR D'ENTRAÎNEMENT

(30) Priority: 23.06.2016 ES 201630853
(43) Date of publication of application: 17.07.2019
(73) Proprietor: Trofymchuk, Oleksiy, 08911 Badalona (ES); Trofymchuk, Oleksandr, 08911 Badalona (ES)
(72) Inventor: Trofymchuk, Oleksiy, 08911 Badalona (ES); Trofymchuk, Oleksandr, 08911 Badalona (ES)
(74) Representative: Espiell Gomez, Ignacio
(86) International application number: PCT/ES2017/070321
(87) International publication number: WO 2017/220826

(56) References cited:
- WO-A1-2013/084556
- WO-A2-2015/155249
- CN-A- 104 734 438
- DE-A1- 2 650 510
- DE-C3- 2 650 510
- JP-A- 2006 238 623
- JP-B2- 5 450 361
- KR-A- 20140 126 853
- KR-A- 20160 028 688
- US-A1- 2008 042 506
- US-A1- 2012 104 877
- US-A1- 2012 146 445
- US-B1- 9 270 149

## Description

### OBJECT OF THE INVENTION

The invention, as it appears in the title of this specification, refers to a magnetic device adapted to be used as energy generator or as driving motor that provides, to the function to which it is designed, advantages and characteristics of novelty that will be described in details below.

The object of this invention refers to a device that, essentially constituted by a set formed by a shaft with two disks of rotary magnetic poles and a central winding, takes advantage of the capacity to be reppelled from the magnetic poles having opposite signs and of the coils to generate an electric current when they are excited by a magnetic field for, from an initial external thrust that rotates a first disk having magnetic poles, generating electrical energy in the winding with a high level of power because of the particular configuration of the winding coils with lapped ends and the arrangement of the magnetic poles in the disks, provoke that, in turn, the second disk rotates in the opposite direction, increasing the magnetic field generated and, in addition, kinetic energy is generated of which advantage can also be taken.

### FIELD OF APPLICATION OF THE INVENTION

The field of application of this invention is within the sector of industry engaged in the production of appliances, systems and devices for the generation of electrical energy, in particular focused in the scope of the electric generators or magnetic drive motors.

### BACKGROUND OF THE INVENTION

As it is well known, an electric generator is a device capable to maintain a difference of electrical power between two of its points (called poles or terminals) transforming the mechanical energy into electrical energy. This transformation is achieved by the action of a magnetic field on the electrical conductors arranged on a frame (stator). If a relative mechanical movement occurs between the conductors and the field, an electromotive force (EMF) is generated. This system is based on the law of Faraday.

The rotor of some electric motors operates in the opposite direction, taking advantage of the electrical energy to generate movement, because in this type of motors - electric generators, the rotor is the component that rotates (turns) and that, jointly with its fixed counterpart, the stator, constitutes the main set for power transmission.

The objective of this invention is, therefore, to develop a new device generating magnetic electricity if applied to a kinetic energy or a magnetic driving motor device if applied to an electrical energy.

Patents JP2012120319, US2012146445, DE2650510, JP2006238623, WO2013084556 and CN104734438 disclose devices where one or more disks are placed parallel to a winding coil so as to produce a brushless motor.

### DESCRIPTION OF THE INVENTION

The energy generating magnetic device or driving motor that the invention proposes is therefore configured as a significant improvement within its field of application, because when it is implemented, the mentioned objectives are satisfactorily reached, the characterizing details that distinguish them from the already known, being conveniently included in the appended claims.

Specifically, what the invention proposes, as it was above mentioned, is a device generating magnetic electricity if a kinetic energy is applied or a magnetic driving motor device if an electrical energy is applied including a shaft to which are coupled, at least, two disks of rotatory magnetic poles and a fixed central winding, showing a configuration such that, when moving one of the disks, by means of any external means, a magnetic field is generated that excites the winding provoking the generation of electrical energy, at the same time that the rotatory movement of the second disk in the direction opposite to the direction in which the first rotates and, thus, provokes the formation of a larger magnetic field that increases the power of the electrical energy generated in the central winding.

To this aim, both disks are provided with magnetic poles and arranged in an alternate adjacent way, that means, located in an alternate way with positive pole and with negative pole successively in a radial arrangement at the centre of the disk.

Preferably, both disks are exactly equal or at least, they show the same number of magnetic poles having a similar magnetic power.

And on its hand, the central winding is arranged in, at least, two coils that show, each of them, a core of magnetic conductive material such as steel, around which the winding of conductive filaments is incorporated, the configuration of which tilted and overlapping at its ends is which determines the capacity to provoke the movement of the second disk in a direction opposite to that of the first disk.

More specifically, each core possesses, on both sides an end with the same inclination with respect to the axis of the shaft, determining respective bodies of configuration, in its front elevation, approximately diamond-shaped which pointed ends are axially overlapping each other in adjacent coils, that means, the coil remains separate but overlaps the adjacent coil and preferably, the points of the winding being free, so that this latter is not axially overlapping in adjacent coils.

With this, when rotating the first disk, the magnetic field generated by its magnetic poles alternatively provokes a magnetic field that, at same time provokes the movement of the second disk in opposite direction.

By means of the related connection of terminals and wiring to the winding to connect it to an accumulator or transformer, preferably through the shaft, it can be taken advantage of the electrical energy generated.

Thus, and to avoid as much as possible the loss of energy due to the rubbing effect, between the shaft and the disks related bearings are interposed that minimize such rubbing.

In addition, optionally, by means of the related coupling of transmission means, it can also be taken advantage of the kinetic energy generated by the rotation of the second disk having magnetic poles.

### DESCRIPTION OF THE DRAWINGS

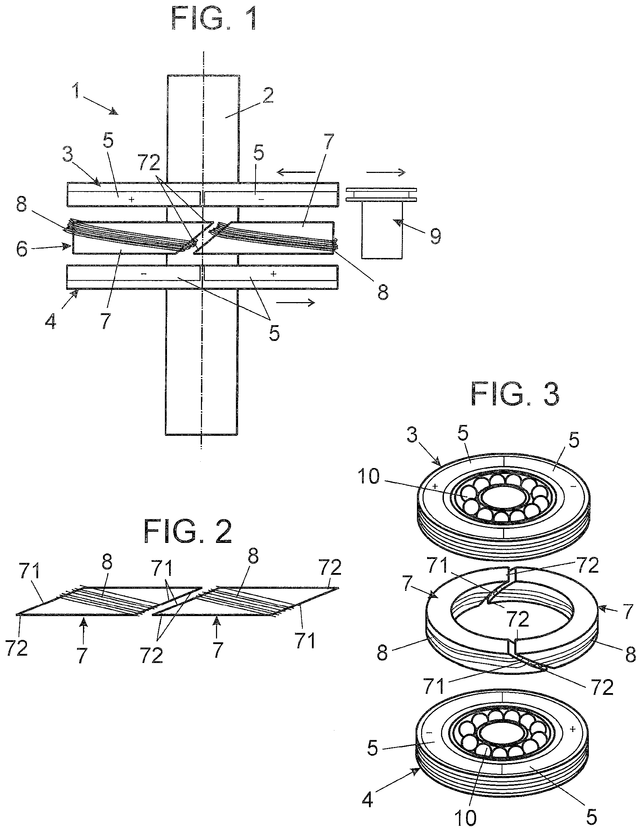

To complete this description that is carried out and in order to assist to a best understanding of the characteristics of the invention, attached to this specification, as an integral part thereof is a sheet of drawings in which for illustration and non- limitation purpose the following has been represented:
Figure number 1.- Shows a schematic elevation view of an example of embodiment of the magnetic device generating energy, object of the invention, in which the main parts and elements appear of which it is comprised , as well as its configuration and arrangement;
Figure number 2. - Shows a schematic representation of the shape in front elevation that the cores of the central winding of the device show, and their lapping on the contiguous coils; and
Figure number 3. - Shows a schematic exploded view in perspective of the disks and the central winding, according to the same example of the device of the invention shown in the figure 1.

### PREFERRED EMBODIMENT OF THE INVENTION

Seen the described figures, and according to the numbering adopted in them, a non-limitative example of the magnetic device can be seen, which includes the parts and elements that are indicated and described in detail below.

Thus, as it can be seen in the figure 1, the device (1) in question is comprised of a shaft (2) to which are coupled, with possibility of rotation and interposing related bearings (10), at least, two disks (3, 4) with magnetic poles (5) and, without possibility of rotation, that means, jointly fixed to the shaft (2), to a central winding (6), located between a first disk (3) and a second disk (4).

In addition, both disks (3, 4) are provided with several magnetic poles (5) which are radially placed and arranged with the successively alternating, positive and negative polarity, being preferably in number, position and magnetic force equal or at least very similar in each of the said disks (3, 4), although, preferably, both disks (3, 4) and their magnetic poles (5) are exactly identical.

On its part, the central winding (6) is comprised, at least, of two coils constituted, each, by a core (7) of conductive magnetic material, such as steel, with a winding (8) of conductive wire, the configuration of which core (7), shows, on both sides, respective ends having tilting sides (71), always towards a same side with respect to the shaft (2), ending in an edge (72), so that they determine respective bodies with a configuration, which development in front elevation, is approximately diamond-shaped, as it can be seen in the figure 2.

In the figures 1 and 3, the example represented has only two magnetic poles (5) by disk and, therefore, only two cores (7) of coils.

In any case, it is important to point out that the said ends of tilted sides (71) of the cores (7) of the coils are located at such a distance between them that their respective edges (72) are overlapping each other in adjacent coils and, preferably, without the sides of the respective winding coils (8) are overlapping as the said edges (72) are not covered by them, as it can be clearlv seen in the representation of the figure 2.

The device (1) in addition provides an external element (9) that, being of any type, gives a movement to a first disk (3), making that a magnetic field is generated that in turn provokes the excitation of the coils and, at same time, the rotation, in opposite direction of the second disk (4).

In a preferred embodiment, the cores (7) have grooves on their upper or lower side on which the conductive wire winding (8) is wound.

In another preferred embodiment, the cores (7) have holes through which the wire winding (8) is wound.

## Claims

1. Magnetic device adapted to be used as generator of electricity if a kinetic energy is applied or as magnetic driving motor if an electrical energy is applied, comprising;
a shaft (2), the axis of the shaft defining the axial, radial and circumferential directions,
a central winding (6) of circumferentially arranged coils, each of the coils formed by a core (7) of magnetic material with a winding coil (8) of conductive wire, and
at least, a first disk (3) and a second disk (4) with several magnetic poles (5) coupled to the shaft (2) with possibility of rotation about the shaft,
wherein the central winding (6) is located axially between the first and second disks (3, 4) and coupled to the shaft without possibility of rotation about the shaft:
wherein the magnetic poles (5) are radially located in the first and second disks, with the polarity successively alternating, positive and negative;
**characterized in that** the central winding (6) comprises at least two coils whose cores (7) have a configuration that presents, on both circumferential sides, ends having tilted sides (71), with the same inclination with respect to the axis of the shaft (2), each finishing in an edge (72); **in that** the said cores (7) of adjacent coils of the said at least two coils are located at such a distance between them that their ends having tilted sides (71) with the edge (72) are axially overlapping each other; and **in that**, in addition, the first disk (3) is connectable to an external element (9) so as to transmit movement between them, where, when the device is used as generator of electricity, the movement of the first disk (3) produces the excitation of the coils which, in turn, produces the rotation of the second disk (4) in an opposite direction, whilst, when the device is used as a magnetic driving motor, the excitation of the coils with the electrical energy produces the rotation of the first and second disks (3. 4) in opposite directions.

2. Magnetic device, according to claim 1, **characterized in that** the magnetic poles (5) of each of the disks (3, 4) are similar in number, position and magnetic force.

3. Magnetic device, according to claims 1 to 2, **characterized in that** both disks (3, 4) are identical.

4. Magnetic device, according to claim 1, **characterized in that**, in a view where the axial direction is the vertical direction, the front-elevation shape of the cores (7) of the coils is a diamond.

5. Magnetic device, according to any of claims 1 to 4,**characterized in that** the edges (72) of the cores (7) are not covered by the winding coil (8) of wires, so that, the ends having tilted sides (71) are axially overlapping each other in the adjacent coils and the wires of the respective winding coils (8) are not axially overlapping.

## Patentansprüche

1. Magnetvorrichtung zur Verwendung als Stromgenerator, wenn kinetische Energie angelegt wird, oder als Magnetantriebsmotor, wenn elektrische Energie angelegt wird, umfassend:
• eine Welle (2), wobei die Achse der Welle die Axial-, Radial- und Umfangsrichtung definiert,
• eine zentrale Wicklung (6) aus in Umfangsrichtung angeordneten Spulen, wobei jede der Spulen durch einen Kern (7) aus magnetischem Material mit einer Wicklungsspule (8) aus leitfähigem Draht gebildet ist, und
• mindestens eine erste Scheibe (3) und eine zweite Scheibe (4) mit mehreren Magnetpolen (5), die mit der Welle (2) mit Rotationsmöglichkeit um die Welle gekoppelt sind,
wobei die zentrale Wicklung (6) axial zwischen der ersten und der zweiten Scheibe (3, 4) angeordnet ist und mit der Welle ohne Rotationsmöglichkeit um die Welle gekoppelt ist;
wobei die Magnetpole (5) radial in der ersten und in der zweiten Scheibe angeordnet sind, wobei die Polarität nacheinander abwechselnd positiv und negativ ist;
**dadurch gekennzeichnet, dass** die zentrale Wicklung (6) mindestens zwei Spulen umfasst, deren Kerne (7) eine Konfiguration aufweisen, die auf beiden Umfangsseiten Enden mit geneigten Seiten (71) mit der gleichen Neigung in Bezug auf die Achse der Welle (2) aufweisen, die jeweils in einer Kante (72) enden; dadurch, dass die Kerne (7) benachbarter Spulen der mindestens zwei Spulen in einem solchen Abstand zwischen ihnen angeordnet sind, dass ihre Enden geneigte Seiten (71) aufweisen, wobei sich die Kante (72) einander axial überlappt; und dadurch, dass zusätzlich die erste Scheibe (3) mit einem externen Element (9) verbindbar ist, um eine Bewegung zwischen ihnen zu übertragen, wobei, wenn die Vorrichtung als Stromgenerator verwendet wird, die Bewegung der ersten Scheibe (3 ) die Erregung der Spulen erzeugt, die wiederum die Drehung der zweiten Scheibe (4) in einer entgegengesetzten Richtung erzeugen, während, wenn die Vorrichtung als Magnetantriebsmotor verwendet wird, die Erregung der Spulen mit der elektrischen Energie die Drehung der ersten und zweiten Scheibe (3,4) in entgegengesetzten Richtungen erzeugt.

2. Magnetvorrichtung nach Anspruch 1, **dadurch gekennzeichnet, dass** die Magnetpole (5) jeder der Scheiben (3, 4) in Anzahl, Position und Magnetkraft ähnlich sind.

3. Magnetvorrichtung nach den Ansprüchen 1 bis 2, **dadurch gekennzeichnet, dass** beide Scheiben (3, 4) identisch sind.

4. Magnetvorrichtung nach Anspruch 1, **dadurch gekennzeichnet, dass** in einer Ansicht, in die Axialrichtung die Vertikalrichtung ist, die Vorderansichtsform der Kerne (7) der Spulen ein Diamant ist.

5. Magnetvorrichtung nach einem der Ansprüche 1 bis 4, **dadurch gekennzeichnet, dass** die Kanten (72) der Kerne (7) nicht durch die Wickelspule (8) aus Drähten bedeckt sind, sodass die Enden, die geneigte Seiten (71) aufweisen, einander in den benachbarten Spulen axial überlappen und sich die Drähte der jeweiligen Wicklungsspulen (8) axial nicht überlappen.

## Revendications

1. Dispositif magnétique adapté pour être utilisé comme générateur d'électricité si une énergie cinétique est appliquée ou comme moteur d'entraînement magnétique si une énergie électrique est appliquée, comprenant :
• un arbre (2), l'axe de l'arbre définissant les directions axiale, radiale et circonférentielle,
• un enroulement central (6) de bobines agencées circonférentiellement, chacune des bobines étant formée par un noyau (7) en matériau magnétique avec une bobine d'enroulement (8) en fil conducteur, et
• au moins, un premier disque (3) et un second disque (4) avec plusieurs pôles magnétiques (5) couplés à l'arbre (2) avec possibilité de rotation autour de l'arbre,
dans lequel l'enroulement central (6) est situé axialement entre les premier et second disques (3, 4) et couplé à l'arbre sans possibilité de rotation autour de l'arbre ;
dans lequel les pôles magnétiques (5) sont situés radialement dans les premier et second disques, avec la polarité alternant successivement du positif au négatif ;
**caractérisé en ce que** l'enroulement central (6) comprend au moins deux bobines dont les noyaux (7) ont une configuration qui présente, de part et d'autre des deux côtés circonférentiels, des extrémités ayant des côtés inclinés (71), avec la même inclinaison par rapport à l'axe de l'arbre (2), chacune se terminant par un bord (72) ; **en ce que** lesdits noyaux (7) de bobines adjacentes desdites au moins deux bobines sont situés à une distance telle entre eux que leurs extrémités ayant des côtés inclinés (71) avec le bord (72) se chevauchent axialement l'une l'autre ; et **en ce que**, de plus, le premier disque (3) peut être connecté à un élément extérieur (9) de manière à transmettre du mouvement entre eux, où, lorsque le dispositif est utilisé comme générateur d'électricité, le mouvement du premier disque (3) produit l'excitation des bobines qui, à leur tour, produisent la rotation du second disque (4), dans une direction opposée, tandis que, lorsque le dispositif est utilisé comme moteur d'entraînement magnétique, l'excitation des bobines avec l'énergie électrique produit la rotation des premier et second disques (3, 4) dans des directions opposées.

2. Dispositif magnétique, selon la revendication 1, **caractérisé en ce que** les pôles magnétiques (5) de chacun des disques (3, 4) sont similaires en nombre, position et force magnétique.

3. Dispositif magnétique, selon les revendications 1 à 2, **caractérisé en ce que** les deux disques (3, 4) sont identiques.

4. Dispositif magnétique, selon la revendication 1, **caractérisée en ce que**, dans une vue où la direction axiale est la direction verticale, la forme en élévation avant des noyaux (7) des bobines est un losange.

5. Dispositif magnétique, selon l'une quelconque des revendications 1 à 4, **caractérisé en ce que** les bords (72) des noyaux (7) ne sont pas recouverts par la bobine d'enroulement (8) de fils, de sorte que, les extrémités ayant des côtés inclinés (71) se chevauchent axialement l'une l'autre dans les bobines adjacentes et les fils des bobines d'enroulement (8) respectives ne se chevauchent pas axialement.
